# FASCICULE DE BREVET EUROPEEN

(11) **EP 2 005 084 B1**
(45) Date de publication et mention de la délivrance du brevet: **08.05.2019**
(21) Numéro de dépôt: 07731729.5
(22) Date de dépôt: 12.03.2007
(51) Int. Cl.: F25D 3/12, C01B 32/55

(54) **DISPOSITIF ET PROCÉDÉ D'EMBALLAGE DE NEIGE CARBONIQUE DANS UN FILM PLASTIQUE**
VORRICHTUNG UND VERFAHREN ZUR VERPACKUNG VON TROCKENEIS IN EINER KUNSTSTOFFFOLIE
DEVICE AND METHOD FOR PACKAGING DRY ICE IN A PLASTIC FILM

(30) Priorité: 03.04.2006 FR 0651164
(43) Date de publication de la demande: 24.12.2008
(73) Titulaire: L'AIR LIQUIDE, Société Anonyme pour l'Etude et l'Exploitation des Procédés Georges Claude, 75007 Paris (FR)
(72) Inventeur: FLAMANT, Hervé, F-33500 Libourne (FR); FOUCHE, Jacques, F-91370 Verrieres Le Buisson (FR); GIBERT, Philippe, F-93420 Villepinte (FR)
(74) Mandataire: Mellul-Bendelac, Sylvie Lisette
(86) Numéro de dépôt international: PCT/FR2007/050913
(87) Numéro de publication internationale: WO 2007/113411

(56) Documents cités:
- EP-A- 0 990 836
- EP-A- 1 188 715
- EP-A1- 1 186 842
- WO-A-01/38221
- FR-A1- 2 604 243
- GB-A- 1 438 226
- GB-A- 2 281 775
- JP-A- 58 069 711
- JP-A- 60 131 818
- US-A- 3 214 928
- US-A- 3 666 849

## Description

La présente invention concerne un dispositif d'emballage de neige carbonique dans un film plastique. L'invention concerne également un procédé d'emballage de neige carbonique dans des sacs plastiques, de façon continue et automatique, mettant en oeuvre ledit dispositif.

Il est connu que les produits congelés, surgelés ou bien frais, notamment alimentaires, qui doivent être maintenus à température dirigée de +6°C à - 20°C ou moins, sans rupture de leur chaîne de froid depuis leur refroidissement, congélation ou surgélation jusqu'à leur utilisation, nécessitent des entrepôts, moyens de transport, et magasins, munis d'installations de réfrigération, qui sont actuellement généralement électriques. Cependant, dans de nombreux cas, par exemple pour un transport non motorisé, il est impossible de transporter les produits sans les sortir de l'installation de réfrigération où ils sont entreposés, car les risques d'une remontée en température sont importants, notamment si les conditions climatiques sont défavorables. En vue d'éviter une telle remontée en température lors de leur transport, il est habituel de disposer les produits frais, congelés ou surgelés dans un environnement maintenu à température contrôlée dans une enceinte isotherme. La régulation de température est par exemple assurée par la lente sublimation de neige carbonique conditionnée dans des sacs de film plastique perforé. La neige carbonique est un produit relativement peu onéreux et présente un pouvoir réfrigérant. Sa température de - 80°C environ assure un temps de conservation au froid des produits relativement long.

Ainsi, la demande EP 1 186 842 décrit un dispositif d'emballage de neige carbonique dans un film plastique comprenant des moyens de distribution et de mise en forme du film plastique, un générateur de neige carbonique en forme de tube relié à une source de dioxyde de carbone liquide et placé de manière à remplir le film plastique mis en forme. Les moyens de distribution et de mise en forme du film plastique comprennent un fourreau conformateur du film plastique qui est placé concentriquement autour du générateur de neige carbonique tout en laissant un espace libre entre le fourreau conformateur et le générateur de neige carbonique. Lorsque le dioxyde de carbone liquide sous pression est libéré au niveau de la partie supérieure du générateur de neige carbonique, il se détend à la pression atmosphérique et frappe les parois du générateur de neige carbonique, ce qui engendre d'une part la formation d'un solide sous forme pulvérulente connu sous le nom de neige carbonique, à une température très inférieure à 0°C, de l'ordre de -80°C, et d'autre part du dioxyde de carbone à l'état gazeux, également à une température très inférieure à 0°C, de l'ordre de -80°C. La neige carbonique ainsi obtenue tombe par gravité dans le film plastique mis en forme, tandis que le dioxyde de carbone gazeux s'échappe par l'espace formé entre le fourreau conformateur et le générateur de neige carbonique.

Ce dispositif présente cependant un inconvénient important qui empêche son utilisation en continu de façon industrielle. En effet, le dioxyde de carbone gazeux qui s'échappe dans l'espace formé entre le générateur de neige carbonique et le fourreau conformateur, refroidit les parois du fourreau conformateur de façon significative ce qui entraîne un brusque refroidissement de la vapeur d'eau présente dans l'air ambiant et donc la formation de cristaux de glace sur les parois, notamment extérieures, du fourreau conformateur. La formation de cristaux de glace empêche l'avancement du film plastique sur le fourreau conformateur. Plus l'hygrométrie de l'air ambiant est élevée plus ce phénomène est accentué.

L'objectif de la présente invention est donc de pallier à tout ou partie des inconvénients du dispositif de l'art antérieur.

Dans ce but, l'invention concerne un dispositif d'emballage de neige carbonique dans un film plastique comprenant :
- des moyens de distribution et de mise en forme d'un film plastique comprenant un fourreau conformateur sur la paroi externe duquel se déroule le film plastique,
- un générateur de neige carbonique relié à une source de dioxyde de carbone liquide, le générateur de neige carbonique étant placé à l'intérieur du fourreau conformateur de manière à laisser un espace libre entre le générateur et le fourreau conformateur et à permettre le remplissage du film plastique mis en forme avec de la neige carbonique, et
- des moyens de scellage du film plastique mis en forme,
se caractérisant en ce que le fourreau conformateur est équipé de moyens d'isolation thermique et/ou de moyens de chauffage.

En équipant le fourreau conformateur avec des moyens d'isolation thermique et/ou des moyens de chauffage, on empêche le dioxyde de carbone gazeux, qui est formé lors de la génération de neige carbonique, de refroidir brusquement les parois du fourreau conformateur. On évite ainsi la formation de cristaux de glace sur les parois, notamment extérieures, du fourreau conformateur. De ce fait, le film plastique ne colle plus au fourreau conformateur et il n'y a plus de problèmes d'avancement du film plastique dus au refroidissement des parois du fourreau conformateur par le dioxyde de carbone gazeux formé lors de la génération de neige carbonique.

D'autres caractéristiques et avantages de l'invention apparaîtront à la lecture de la description qui va suivre. Des formes et des modes de réalisation de l'invention sont donnés à titre d'exemples non limitatifs, illustrés par les dessins joints dans lesquels:
- la figure 1 est une vue schématique d'un dispositif selon l'invention,
- la figure 2 est une vue schématique d'un dispositif d'ensachage,
- la figure 3 est un détail du dispositif de la figure 1 ;
- la figure 4 est un détail d'un mode de réalisation particulier de l'invention ;
- la figure 5 est une coupe transversale selon AA' de la figure 4.

Les moyens d'isolation et/ou de chauffage dont est équipé le fourreau conformateur sont tels qu'ils permettent le maintien de la surface de la paroi du fourreau conformateur sur laquelle se déroule le film plastique à une température suffisamment élevée pour éviter toute cristallisation de la vapeur d'eau sur cette paroi. De façon avantageuse, cette température est d'au moins -10°C, de préférence d'au moins 0°C et plus préférentiellement encore d'au moins 10°C.

Dans un mode de réalisation particulier, les moyens d'isolation thermique peuvent consister en au moins une couche en matériau isolant choisi dans le groupe comprenant le liège, le polystyrène, la laine de verre, etc........ La couche en matériau isolant peut être appliquée sur la surface interne du fourreau conformateur, c'est-à-dire sur la surface du fourreau conformateur opposée à la surface sur laquelle glisse le filme plastique. Etant donné que cette couche est en contact avec le gaz carbonique, de préférence, elle n'est pas poreuse et peut éventuellement être recouverte d'une couche fine ou peau protectrice, en un matériau non poreux et de préférence également isolant.

La peau peut être par exemple constituée d'un film métallique ou plastique.

Selon un autre mode de réalisation, un espace libre ou vide est ménagé entre la couche en matériau isolant et la surface interne du fourreau conformateur. L'espace libre est un espace dépourvu de matériau qui est rempli d'air ambiant à la pression atmosphérique ou encore tiré au vide.

Selon un mode de réalisation particulier, la surface interne du fourreau conformateur comporte, à la place de la couche en matériau isolant ou de façon juxtaposée à la couche en matériau isolant, au moins une couche en matériau chauffant.

La couche en matériau chauffant consiste par exemple en une résistance électrique, ou encore en un élément creux rempli de liquide dont la température peut être ajustée (par exemple eutectique).

Dans l'espace libre, une sonde thermique peut être placée afin d'ajuster la température de la couche de matériau chauffant à la température souhaitée.

Selon un mode de réalisation particulièrement avantageux, la paroi interne du fourreau conformateur est constituée d'une superposition de couches de matériaux chauffants, isolants, qui peuvent être juxtaposées ou séparées par au moins une zone de vide.

Ainsi, une superposition particulièrement adaptée consiste en la succession d'une peau protectrice, une couche de matériau isolant, une couche de matériau chauffant et un espace vide, l'espace vide pouvant être doté d'une sonde thermique, l'espace vide se trouvant le plus proche de la paroi interne du fourreau conformateur.

L'homme du métier saura adapter le nombre, la nature et l'épaisseur des couches constitutives en fonction des capacités de la machine et de la vitesse de production recherchée.

A titre indicatif, des plages possibles d'épaisseur peuvent être les suivantes :
- peau protectrice : 0,5 mm à 5 mm, de préférence 0,8 mm à 2 mm ;
- matériau isolant : 0,5 cm à 10 cm, de préférence 2 cm à 5 cm ;
- matériau chauffant : 2cm à 15cm, de préférence 3cm à 10 cm ;
- vide : 1cm à 5 cm, de préférence 2 cm à 4 cm ;
la paroi du manchon conformateur ayant une épaisseur comprise entre 0,5 cm et 3 cm, de préférence de l'ordre de 1 cm.

Avantageusement, le dispositif d'emballage de neige carbonique comporte des moyens d'injection de gaz d'inertage au niveau du générateur de gaz carbonique. Ceci permet de balayer le générateur de neige carbonique en continu afin d'éviter une réaspiration d'air ou de dioxyde de carbone entraînant de la neige carbonique dans le générateur de neige carbonique lorsque l'alimentation en dioxyde de carbone liquide est coupée et afin de permettre une meilleure descente de la neige carbonique dans le film plastique mis en forme.

Les moyens d'injection de gaz d'inertage comprennent par exemple une buse d'amenée de gaz disposée à l'entrée du générateur de gaz carbonique.

Le gaz d'inertage utilisé peut être n'importe quel gaz non réactif vis-à-vis de la neige carbonique. Si la neige carbonique est destinée à la conservation de produits alimentaires ce gaz sera compatible avec une telle utilisation. Le gaz préféré est le dioxyde de carbone. Mais avant tout on préfèrera mettre en oeuvre un gaz d'inertage substantiellement anhydre (point de rosée de l'ordre de -40°) pour éviter de givrer, du fait de la température de la neige carbonique, les éventuelles traces d'eau en formant de la glace hydrique.

Selon un mode de réalisation particulier, le dispositif d'emballage de neige carbonique peut comporter des moyens d'injection d'un fluide présentant une température inférieure à la température de rosée de l'air, au contact et à l'intérieur du conteneur en film plastique. Par exemple, de tels moyens peuvent être constitués par une canne d'injection disposée, dans l'espace formé entre le générateur de neige carbonique et le conformateur et dont l'extrémité libre est orientée vers le film plastique libéré par le conformateur.

Tout fluide de qualité alimentaire convient à ce propos. Cependant, le dioxyde de carbone liquide est préféré.

Selon un mode de réalisation particulier le moyen d'injection de dioxyde de carbone liquide est relié à la source de dioxyde de carbone liquide permettant la génération de neige carbonique. Une vanne, généralement une électrovanne, est interposée entre la canne d'injection et la source de dioxyde de carbone liquide de manière à déclencher et arrêter la fourniture de dioxyde de carbone liquide. Une vanne, généralement une électrovanne, est également interposée entre le générateur de neige carbonique et la source de dioxyde de carbone liquide de manière à déclencher et arrêter la fourniture de neige carbonique. Lorsque le dispositif selon l'invention est mis en marche, l'électrovanne de la canne d'injection capillaire est ouverte, puis fermée, avant que l'électrovanne du générateur de neige carbonique soit ouverte. Les vannes peuvent être commandées par une minuterie déterminant leur temps d'ouverture et donc la dose de neige carbonique à emballer. La minuterie peut être déclenchée tout moyen y compris par un monnayeur.

Selon un mode de réalisation avantageux, le dispositif d'emballage de neige carbonique comprend au moins un moyen d'évacuation du dioxyde de carbone gazeux. Ce moyen peut être constitué par l'espace formé entre la paroi extérieure du générateur de neige carbonique et la paroi intérieure du fourreau conformateur. Le moyen d'évacuation est connecté à un caisson de confinement en partie haute, qui sera relié d'une part à une entrée d'air réglable dit « chaud », permettant le réchauffage de ce gaz carbonique qui se trouve à une température de l'ordre de -80°C, et d'autre part à une canalisation elle-même connectée à un système de dépression permettant l'aspiration de ce mélange toxique.

Les moyens de distribution, de mise en forme et de déplacement du film plastique sont ceux habituellement mis en oeuvre dans les dispositifs d'emballage connus. Généralement, ces moyens consistent à distribuer en continu une bande de film plastique, à la conformer en tube par enroulement sur un fourreau préconformateur, à sceller les deux bords du tube se rejoignant, à faire glisser le tube obtenu en aval du fourreau préconformateur. Les moyens de scellage du film plastique, une fois ce dernier mis en forme, permettent de fermer par thermosoudage, puis de découper le tube au niveau du film soudé pour obtenir un sachet. Dans ce cas, le générateur de neige carbonique est placé à l'intérieur du fourreau conformateur, de manière à ce que la neige produite soit dirigée dans le sachet en formation. De préférence, les moyens de distribution et de mise en forme du film plastique sont mis en place de manière à former un sachet vertical dont l'ouverture est sur le côté supérieur, et le générateur de neige carbonique est orienté verticalement de manière à ce que la neige carbonique formée tombe par gravité dans le sachet plastique mis en forme et qu'une fois ce dernier scellé et découpé, le sachet comprenant la neige carbonique tombe également par gravité.

Le film plastique est généralement choisi parmi les matières permettant l'évacuation du dioxyde de carbone gazeux issu de la sublimation de la neige carbonique. Cette propriété peut être obtenue grâce à la porosité du film plastique. Le film plastique mis en oeuvre est alors microporeux ou présente des microperforations. Ainsi, le film plastique peut être choisi de manière à ce que les perforations permettent l'échappement de la masse importante de gaz de détente et aussi la rétention et le confinement des fins cristaux constitutifs de la neige carbonique. Les microperforations peuvent être réalisées lors de la fabrication du film plastique ou au cours du procédé selon l'invention, par exemple dans une étape préalable de préparation du film plastique tel que par le passage du film plastique sur des picots perforateurs. De préférence, le film plastique est thermosoudable. Il est également préférable, d'une part, qu'il soit suffisamment résistant pour supporter la pression de la neige carbonique lors de son remplissage et de sa manipulation, et, d'autre part, suffisamment isolant thermiquement pour éviter tout risque de brûlure par le froid lors de ses manipulations ; ces deux propriétés peuvent être obtenues par le choix d'une épaisseur de matériau suffisamment importante. De plus, dans le cas où le conteneur est destiné à une utilisation dans le domaine alimentaire, le matériau choisi doit naturellement être approprié à cette utilisation. Enfin, il est généralement préférable que le film plastique soit biodégradable compte-tenu du respect de l'environnement. Selon le mode préféré de l'invention, le film plastique est du polypropylène microperforé d'une épaisseur comprise entre 25 et 80 microns, de préférence entre 35 et 70 microns.

Bien entendu, l'épaisseur du film plastique sera adaptée à la quantité de neige carbonique contenue dans un sachet. De la même façon, le nombre de perforations et leur diamètre, seront adaptés en fonction de la quantité de neige carbonique contenue et de la vitesse de sublimation recherchée.

Le dispositif peut également comprendre au moins un moyen de compactage de la neige carbonique dans le conteneur en film plastique. Un tel moyen peut consister en une tapette disposée sur la partie inférieure du containeur en film plastique. La dite tapette peut être actionnée par un système d'électroaimants ou par un système electro-pneumatique.

L'invention concerne également un procédé d'emballage de neige carbonique dans un conteneur en film plastique, dans lequel :
- on génère de la neige carbonique dans un générateur de neige carbonique par injection de dioxyde de carbone liquide,
- on introduit la neige carbonique formée dans un conteneur en film plastique, et
- on ferme le conteneur en film plastique,
caractérisé en ce que l'on injecte en continu un gaz d'inertage dans le générateur de neige carbonique.

Comme mentionné ci-dessus en relation avec le dispositif d'emballage de neige carbonique selon l'invention, l'injection d'un gaz d'inertage dans le générateur de neige carbonique permet de balayer le générateur de neige carbonique en continu afin d'éviter une ré-aspiration d'air ou de dioxyde de carbone dans le générateur de neige carbonique lorsque la vaporisation est arrêtée et de permettre une meilleure descente de la neige carbonique dans le film plastique mis en forme.

Tout gaz ne réagissant pas avec la neige carbonique convient à cet effet. Bien entendu si la neige carbonique est destinée à un usage alimentaire, le gaz utilisé sera de qualité alimentaire. De façon préférée, on utilise le dioxyde de carbone.

L'injection de dioxyde de carbone dans le générateur de neige carbonique se fait de manière cadencée, c'est-à-dire que la vaporisation est stoppée dès qu'on a injecté la quantité de dioxyde de carbone liquide suffisante pour donner la quantité souhaitée de neige carbonique.

Le procédé peut en outre comprendre une étape de formation d'un container en film plastique. Cette étape permet la formation en continu d'un container ouvert en film plastique. La neige carbonique formée est alors introduite dans ledit container par son ouverture puis l'ouverture est fermée par exemple par scellage à chaud.

De façon avantageuse la formation du container en film plastique se fait à l'aide d'un dispositif d'emballage comprenant un fourreau conformateur, de préférence cylindrique qui est disposé verticalement et dont le fonctionnement a été décrit précédemment en lien avec le dispositif. La neige carbonique formée remplissant le container par gravité puis lorsque la quantité souhaitée de neige carbonique a été introduite la partie supérieure du container est scellée.

Selon un mode de réalisation particulièrement avantageux du procédé de l'invention, une étape supplémentaire continue de maintien en température du fourreau conformateur est ajoutée. Dans cette étape, la température du fourreau conformateur est maintenue à une température d'au moins -10°C, de préférence d'au moins 0°C et plus préférentiellement encore d'au moins 10°C.

Le procédé conforme à l'invention peut également comprendre une étape d'évacuation en continu du dioxyde de carbone gazeux formé lors de l'étape de formation de neige carbonique. Le dioxyde de carbone gazeux évacué le long du générateur de neige carbonique est généralement rejeté en dehors des locaux d'emballage de la neige carbonique pour des raisons de sécurité.

Une autre étape facultative du procédé selon l'invention comprend l'injection d'un fluide présentant une température inférieure à la température de rosée de l'air au contact et à l'intérieur du conteneur en film plastique, avant l'injection de gaz carbonique liquide.

Selon le mode de mis en oeuvre préféré de l'invention, le fluide présentant une température inférieure à la température de rosée de l'air est du dioxyde de carbone liquide. Ainsi, au cours de l'étape de formation de neige carbonique, ou préalablement à cette étape, il suffit d'injecter une petite quantité de dioxyde de carbone liquide de manière à refroidir la paroi intérieure du conteneur en film plastique à une température inférieure à la température de rosée de l'air. Généralement, quelques grammes de dioxyde de carbone liquide à -80°C ou une giclée de ce dernier provenant d'un capillaire suffisent. Cette étape peut être réalisée à chaque nouvelle étape de formation de neige carbonique ou bien uniquement lors de la mise en route du dispositif après un arrêt prolongé.

A la fin de l'étape de remplissage, le procédé peut comprendre une étape de compactage qui permet de compacter la neige carbonique dans le container afin de faciliter le scellage de la partie supérieure du container.

Selon un mode de réalisation préféré de l'invention, le procédé est un procédé continu d'emballage de neige carbonique.

Généralement, le dioxyde de carbone liquide, qui est injecté à l'intérieur et au contact du conteneur en film plastique, et qui est injecté dans le générateur de neige carbonique proviennent de la même source de dioxyde de carbone liquide. La source de dioxyde de carbone peut être une bouteille de dioxyde de carbone sous pression à l'état liquide, mais de préférence, il s'agit plutôt d'une source de dioxyde de carbone liquide basse pression réfrigérée car ce type de source conduit à un meilleur rendement en génération de neige carbonique. Dans ce second cas, les conditions de stockage de la source de dioxyde de carbone liquide peuvent, par exemple, être une température de -20° C et une pression d'environ 20 bars, voire moins.

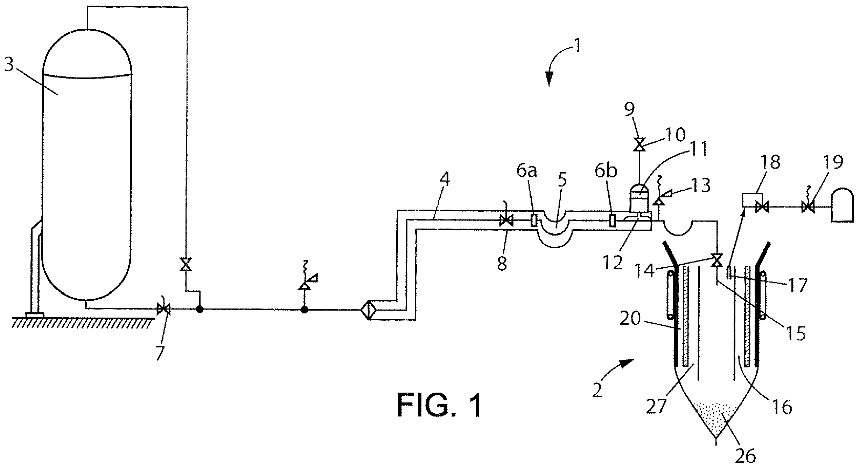

Les figures 1 à 5 illustrent le dispositif et le procédé selon l'invention. L'installation complète (1) est représentée sur la figure 1. Le dispositif conforme à l'invention (2) est alimenté en dioxyde de carbone liquide contenu dans un réservoir réfrigéré de dioxyde de carbone liquide (3) par l'intermédiaire d'une tuyauterie calorifugée (4) et d'un flexible calorifugé (5). Des filtres (6a et 6b) et des vannes de barrage (7, 8) peuvent être placés entre la source de dioxyde de carbone (3) et le générateur (2) ; l'une d'elles (8) pouvant notamment être placée entre la tuyauterie et le flexible. Sur la tuyauterie calorifugée, on peut prévoir un orifice (9) relié à une électrovanne de barrage (10) donnant sur un pot dégazeur (11), la partie inférieure du pot dégazeur étant branchée sur la tuyauterie calorifugée (4) au moyen d'un système (12) d'augmentation de section permettant la séparation du gaz et du liquide. Une soupape (13) est également présente entre la vanne d'arrêt (8) et la vanne de production (14). Après cette vanne de production (14), est montée une buse d'injection (15). Au générateur (16) de neige carbonique est adjoint un système de balayage, d'air sec ou de CO₂ gazeux (17) à basse pression (quelques millibars) maintenus par un détendeur (18), pouvant être commandé par une électrovanne (19).

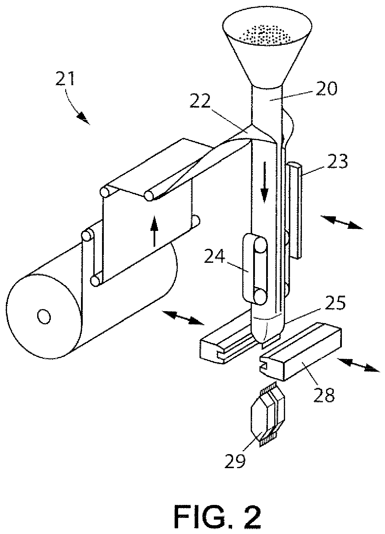

Le générateur de neige carbonique (16) est placé à l'intérieur du fourreau conformateur (20) d'une ensacheuse verticale (21) représentée sur la figure 2.

Lorsque le procédé est mis en oeuvre, le film en plastique (22) est enroulé sur lui-même pour former un tube pris en charge par le fourreau conformateur (20). L'enroulement du film est réalisé de manière à rapprocher les deux bords verticaux du film : ces bords sont amenés à se chevaucher, puis collés par thermosoudage par des moyens de scellage verticaux (23) sur toute leur longueur. Le tube formé est déplacé vers le bas par des poulies de guidage (24) de manière à former un sachet ou container en plastique (25) pour l'introduction de neige carbonique. Sur la figure 2, les flèches indiquent les mouvements de déplacement des moyens de mise en forme et scellage. Une fois le sachet déformé, l'électrovanne (14) s'ouvre quelques dixièmes de secondes : le dioxyde de carbone liquide sort, le générateur (16) produit alors de la neige carbonique (26) qui tombe par gravité dans le sachet en plastique (25). L'électrovanne (14) est fermée. Durant toutes ses opérations, le gaz carbonique est évacué dans le sachet en plastique (25). L'électrovanne (14) est fermée. Le gaz carbonique est évacué par l'espace (27) formé entre le fourreau conformateur (20) du film plastique et le générateur de neige carbonique (16). Enfin, les outils de scellage (28) de l'ensacheuse ferment le plastique par thermosoudage et coupent le plastique soudé pour former un sachet fermé (29).

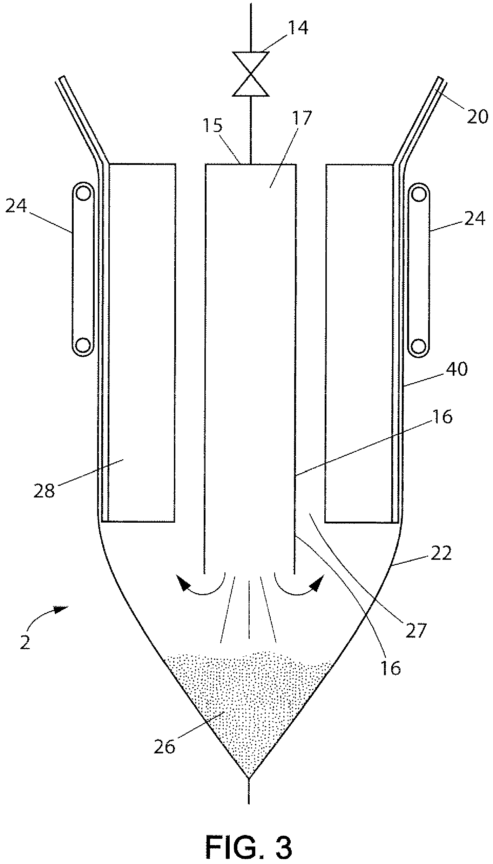

Le dispositif (2) conforme à l'invention est décrit de façon plus détaillée sur les figures 3 à 5, sur lesquelles on voit le générateur 16 de neige carbonique disposé à l'intérieur du fourreau conformateur (20) sur la paroi externe duquel se déroule le film plastique 22 qui est entraîné par les rouleaux entraîneurs 24. L'espace 27 ménagé entre le générateur 16 et la paroi interne du fourreau conformateur qui est recouverte d'un moyen d'isolation 28, permet l'évacuation du dioxyde de carbone formé. La neige carbonique 26 qui tombe dans le containeur en film plastique par gravité est formée par injection par la buse 15 de dioxyde de carbone liquide dans la partie supérieure du générateur 16. Un gaz d'inertage est injecté par la buse 17.

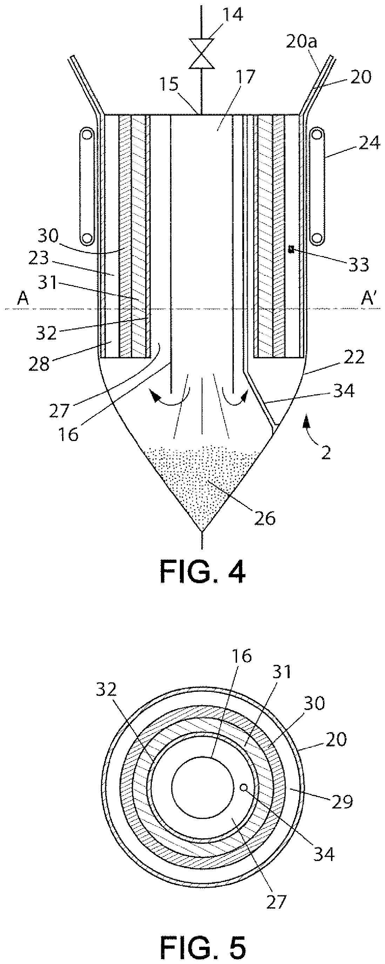

Le mode préféré de réalisation des moyens d'isolation et de chauffage du fourreau conformateur est illustré sur les figures 4 et 5. Dans ce mode de réalisation les moyens d'isolation et de chauffage 28 sont constitués par une superposition de couches de différents matériaux de la façon suivante. En partant de la paroi interne (20a) du fourreau conformateur (20) on trouve un espace vide (29), une couche (30) de matériau chauffant, une couche de matériau isolant (31) et une peau protectrice (32). Dans l'espace vide est disposée un sonde thermique (33). Sur ces figures est également représentée la canne d'injection (34) d'un fluide de température inférieure à la température de rosée de l'air.

Par mise en oeuvre d'un dispositif tel que précédemment décrit, il est possible de remplir en continu des sachets de neige carbonique à une cadence de 1 minute par sachet pour des sachets de 2 kg de neige carbonique.

On ne rencontre aucun problème à la fermeture par thermosoudage du sachet en plastique ni pour le déroulement en continu du film plastique même après un long arrêt du dispositif.

## Revendications

1. Dispositif d'emballage de neige carbonique dans un film plastique (22) ledit dispositif comprenant
- des moyens de distribution et de mise en forme d'un film plastique (22) comprenant un fourreau conformateur (20) sur la paroi externe duquel se déroule le film plastique (22),
- un générateur (16) de neige carbonique relié à une source (3) de dioxyde de carbone liquide, le générateur de neige carbonique étant placé à l'intérieur du fourreau conformateur de manière à laisser un espace libre (27) entre le générateur et le fourreau conformateur et à permettre le remplissage du film plastique mis en forme avec de la neige carbonique, et
- des moyens (23) de scellage du film plastique mis en forme,
**caractérisé en ce que** :
- le fourreau conformateur est équipé :
- de moyens d'isolation thermique (31), consistant en au moins une couche en matériau isolant choisi dans le groupe comprenant le liège, le polystyrène, la laine de verre ; et
- de moyens de chauffage (30) ;
- et **en ce qu'**un espace libre ou vide (29) est ménagé entre la couche en matériau isolant (31) et la surface interne (20a) du fourreau conformateur.

2. Dispositif d'emballage de neige carbonique selon la revendication 1, **caractérisé par le fait que** les moyens d'isolation (31) et/ou de chauffage (30) sont tels qu'ils permettent le maintien de la surface de la paroi du fourreau conformateur (20) sur laquelle se déroule le film plastique à une température d'au moins -10°C, de préférence d'au moins 0°C et plus préférentiellement encore d'au moins 10°C.

3. Dispositif selon la revendication 1 ou 2, **caractérisé par le fait que** la surface interne (20a) du fourreau conformateur comporte, de façon juxtaposée à la couche en matériau isolant, au moins une couche en matériau chauffant.

4. Dispositif selon l'une quelconque des revendications 1 à 3, **caractérisé par le fait que** lesdits moyens d'isolation (31) et de chauffage (30) consistent en la superposition d'une peau protectrice (32), d'une couche de matériau isolant (31), d'une couche de matériau chauffant (30) et d'un espace vide (29), l'espace vide (29) pouvant être doté d'une sonde thermique (33), l'espace vide (29) se trouvant le plus proche de la paroi interne du fourreau conformateur (20).

5. Dispositif selon l'une quelconque des revendications 1 à 4, **caractérisé par le fait qu'**il comprend en outre des moyens d'injection (17) de gaz d'inertage dans le générateur de neige carbonique, et/ou des moyens d'injection (34) d'un fluide présentant une température inférieure à la température de rosée de l'air, au contact et à l'intérieur du conteneur en film plastique (22), et/ou au moins un moyen d'évacuation (27) du dioxyde de carbone gazeux et/ou au moins un moyen de compactage de la neige carbonique dans le conteneur en film plastique.

6. Procédé d'emballage de neige carbonique dans un conteneur en film plastique (22), **caractérisé par** l'utilisation d'un dispositif d'emballage de neige carbonique dans un film plastique (22) conforme à la revendication 5, procédé dans lequel :
- on génère de la neige carbonique dans un générateur de neige carbonique (1) par injection de dioxyde de carbone liquide,
- on introduit la neige carbonique dans le conteneur en film plastique (22) et
- on ferme le conteneur en film plastique (22), procédé dans lequel injecte en continu un gaz dans le générateur de neige carbonique (1), de préférence du dioxyde de carbone gazeux.

7. Procédé d'emballage de neige carbonique selon la revendication 6, **caractérisé en ce qu'**il comprend une étape de formation d'un conteneur en film plastique (22), à l'aide dudit dispositif d'emballage qui comprend un fourreau conformateur (20).

8. Procédé selon la revendication 7 qui comprend une étape de maintien en température du fourreau conformateur (20), de préférence à une température d'au moins -10°C, de préférence d'au moins 0°C et plus préférentiellement encore d'au moins 10°C.

9. Procédé selon l'une quelconque des revendications 6 à 8, qui comprend en outre une étape d'évacuation (27) en continu du dioxyde de carbone gazeux formé lors de l'étape de formation de neige carbonique.

10. Procédé selon l'une quelconque des revendications 6 à 9, qui comprend en outre l'injection (34) d'un fluide présentant une température inférieure à la température de rosée de l'air au contact et à l'intérieur du conteneur en film plastique, avant l'injection de gaz carbonique liquide.

11. Procédé selon l'une quelconque des revendications 6 à 10, qui comprend en outre une étape de compactage de la neige carbonique formée.

12. Procédé selon l'une quelconque des revendications 6 à 11 qui est continu.

## Patentansprüche

1. Vorrichtung zur Verpackung von Trockeneis in einem Kunststofffilm (22), wobei die Vorrichtung Folgendes umfasst
- Mittel zum Verteilen und Formen eines Kunststofffilms (22), die eine Formhülse (20) umfassen, an deren Außenwand sich der Kunststofffilm (22) abwickelt,
- einen Trockeneisgenerator (16), der mit einer Quelle (3) für flüssiges Kohlendioxid verbunden ist, wobei der Trockeneisgenerator innerhalb der Formhülse angeordnet ist, um einen Freiraum (27) zwischen dem Generator und der Formhülse zu lassen und das Füllen des mit Trockeneis geformten Kunststofffilms zu ermöglichen, und
- Mittel (23) zum Versiegeln des geformten Kunststofffilms, **dadurch gekennzeichnet, dass**:
- die Formhülse ausgestattet ist:
- mit Wärmeisoliermitteln (31), bestehend aus mindestens einer Schicht aus Isoliermaterial, ausgewählt aus der Gruppe umfassend Kork, Polystyrol, Glaswolle; und
- mit Erwärmungsmitteln (30);
- und dadurch, dass ein Frei- oder Hohlraum (29) zwischen der Schicht aus Isoliermaterial (31) und der Innenfläche (20a) der Formhülse eingerichtet ist.

2. Vorrichtung zur Verpackung von Trockeneis nach Anspruch 1, **dadurch gekennzeichnet, dass** die Isolier- (31) und/oder Erwärmungsmittel (30) so ausgebildet sind, dass sie es ermöglichen, die Oberfläche der Wand der Formhülse (20), auf der sich der Kunststofffilm abwickelt, auf einer Temperatur von mindestens -10 °C, vorzugsweise mindestens 0 °C und noch bevorzugter mindestens 10 °C zu halten.

3. Vorrichtung nach Anspruch 1 oder 2, **dadurch gekennzeichnet, dass** die Innenfläche (20a) der Formhülse angrenzend an die Schicht aus Isoliermaterial mindestens eine Schicht aus Erwärmungsmaterial beinhaltet.

4. Vorrichtung nach einem der Ansprüche 1 bis 3, **dadurch gekennzeichnet, dass** die Isolier- (31) und Erwärmungsmittel (30) aus der Überlagerung einer Schutzhülle (32), einer Schicht aus Isoliermaterial (31), einer Schicht aus Erwärmungsmaterial (30) und einem Hohlraum (29) bestehen, wobei der Hohlraum (29) mit einer thermischen Sonde (33) versehen werden kann, wobei sich der Hohlraum (29) am nächsten zur Innenwand der Formhülse (20) befindet.

5. Vorrichtung nach einem der Ansprüche 1 bis 4, **dadurch gekennzeichnet, dass** sie weiter Mittel zum Einspritzen (17) von Inertgas in den Trockeneisgenerator und/oder Mittel zum Einspritzen (34) eines Fluids, das eine Temperatur unterhalb der Taupunkttemperatur der Luft aufweist, in Kontakt mit und innerhalb des Behälters aus Kunststofffilm (22) und/oder mindestens ein Mittel zum Auslassen (27) des gasförmigen Kohlendioxids und/oder mindestens ein Mittel zum Verdichten des Trockeneises in dem Behälter aus Kunststofffilm filmumfasst.

6. Verfahren zur Verpackung von Trockeneis in einem Behälter aus Kunststofffilm (22), **gekennzeichnet durch** die Verwendung einer Vorrichtung zur Verpackung von Trockeneis in einer Kunststofffilm (22) nach Anspruch 5, wobei im Verfahren:
- Trockeneis durch Einspritzen von flüssigem Kohlendioxid in einem Trockeneisgenerator (1) erzeugt wird,
- das Trockeneis in den Behälter aus Kunststofffilm (22) eingebracht wird und
- der Behälter aus Kunststofffilm (22) geschlossen wird, wobei bei dem Verfahren kontinuierlich ein Gas, vorzugsweise Kohlendioxidgas, in den Trockeneisgenerator (1) eingespritzt wird.

7. Verfahren zur Verpackung von Trockeneis nach Anspruch 6, **dadurch gekennzeichnet, dass** es einen Schritt des Bildens eines Behälters aus Kunststofffilm (22) mit Hilfe der Vorrichtung zur Verpackung umfasst, die eine Formhülse (20) umfasst.

8. Verfahren nach Anspruch 7, das einen Schritt des Haltens der Temperatur der Formhülse (20), vorzugsweise auf eine Temperatur von mindestens -10 °C, vorzugsweise mindestens 0 °C und noch bevorzugter mindestens 10 °C, umfasst.

9. Verfahren nach einem der Ansprüche 6 bis 8, das weiter einen Schritt des kontinuierlichen Auslassens (27) des gasförmigen Kohlendioxids umfasst, das während des Trockeneisbildungsschritts gebildet wird.

10. Verfahren nach einem der Ansprüche 6 bis 9, das weiter das Einspritzen (34) eines Fluids, das eine Temperatur aufweist, die niedriger als die Taupunkttemperatur der Luft ist, in Kontakt mit und innerhalb des Behälters aus Kunststofffilm, vor dem Einspritzen von flüssigem Kohlendioxid umfasst.

11. Verfahren nach einem der Ansprüche 6 bis 10, das weiter einen Schritt des Verdichtens des gebildeten Trockeneises umfasst.

12. Verfahren nach einem der Ansprüche 6 bis 11, das kontinuierlich ist.

## Claims

1. Device for packaging dry ice in a plastic film (22), said device comprising
- means for dispensing and shaping a plastic film (22) comprising a shaping sleeve (20) on the external wall of which the plastic film (22) unwinds,
- a dry-ice generator (16) connected to a source (3) of liquid carbon dioxide, the dry-ice generator being placed inside the shaping sleeve so as to leave a free space (27) between the generator and the shaping sleeve and to allow the filling of the shaped plastic film with the dry ice, and
- means (23) for sealing the shaped plastic film,
**characterised in that**:
- the shaping sleeve is equipped with:
- thermal isolation means (31), consisting of at least one layer of insulating material chosen from the group comprising cork, polystyrene and glass wool; and
- heating means (30);
- and **in that** a free space or void (29) is provided between the layer of insulating material (31) and the internal surface (20a) of the shaping sleeve.

2. Device for packaging dry ice according to claim 1, **characterised by** the fact that the insulation (31) and/or heating (30) means are such that they allow the maintenance of the surface of the wall of the shaping sleeve (20) on which the plastic film unwinds at a temperature of at least -10 °C, preferably at least 0 °C and more preferentially still at least 10 °C.

3. Device according to claim 1 or claim 2, **characterised by** the fact that the internal surface (20a) of the shaping sleeve comprises, juxtaposed with the layer of insulating material, at least one layer of heating material.

4. Device according to any of claims 1 to 3, **characterised by** the fact that said isolation (31) and heating (30) means consist of the superimposition of a protective skin (32), a layer of insulating material (31), a layer of heating material (30) and a void space (29), the void space (29) being able to be provided with a thermal sensor (33), the void space (29) being situated closest to the internal wall of the shaping sleeve (20).

5. Device according to any of claims 1 to 4, **characterised by** the fact that it further comprises means (17) for injecting inerting gas into the dry-ice generator, and/or means (34) for injecting a fluid having a temperature below the dew point of the air, in contact with and inside the container (22) made from plastic film, and/or at least one means (27) for discharging gaseous carbon dioxide and/or at least one means for compacting the dry ice in the container made from plastic film.

6. Method for packaging dry ice in a container (22) made from plastic film, **characterised by** the use of a device for packaging dry ice in a plastic film (22) in accordance with claim 5, a method wherein:
- dry ice is generated in a dry-ice generator (1) by injecting liquid carbon dioxide,
- the dry ice is introduced into the container (22) made from plastic film, and
- the container (22) made from plastic film is closed,
a method in which a gas is injected continuously into the dry-ice generator (1), preferably gaseous carbon dioxide.

7. Method for packaging dry ice according to claim 6, **characterised in that** it comprises a step of forming a container (22) made from plastic film, by means of said packaging device that comprises a shaping sleeve (20).

8. Method according to claim 7, which comprises a step of maintaining the temperature of the shaping sleeve (20), preferably at a temperature of at least -10 °C, preferably at least 0 °C and more preferentially still at least 10 °C.

9. Method according to any of claims 6 to 8, which further comprises a step (27) of continuous discharge of the gaseous carbon dioxide formed during the step of formation of dry ice.

10. Method according to any of claims 6 to 9, which further comprises the injection (34) of a fluid having a temperature below the dew point of the air in contact with and inside the container made from plastic film, before the injection of liquid carbon dioxide.

11. Method according to any of claims 6 to 10, which further comprises a step of compacting the dry ice formed.

12. Method according to any of claims 6 to 11 that is continuous.
